# EUROPÄISCHE PATENTANMELDUNG

(11) **EP 0 676 374 A2**
(43) Veröffentlichungstag der Anmeldung: **11.10.1995**
(21) Anmeldenummer: 95105083.0
(22) Anmeldetag: 05.04.1995
(51) Int. Cl.: C02F 1/44, B01D 61/02, B01D 61/08

(54) **Verfahren und Vorrichtung zur Reinwasserherstellung**

(30) Priorität: 08.04.1994 DE 4411865
(71) Anmelder: Lauer, Günter, D-79539 Lörrach (DE)
(72) Erfinder: Lauer, Günter, D-79539 Lörrach (DE)
(74) Vertreter: Schmitt, Hans, Dipl.-Ing.

(57) **Zusammenfassung**

Die Erfindung betrifft ein Verfahren zur Reinwasserherstellung mit einer Vorrichtung, welche zumindest zwei Aufbereitungsstufen hat, von denen das Reinwasser wenigstens einer Aufbereitungsstufe einer in Strömungsrichtung nachfolgenden Aufbereitungsstufe als Rohwasser zugeführt wird, wobei in jeder Aufbereitungsstufe jeweils wenigstens eine semipermeable Membran vorgesehen ist, welche eine Teilmenge des der Aufbereitungsstufe zugeführten Rohwassers unter der treibenden Kraft einer Druckdifferenz passiert und wobei die Restmenge des an der Membran vorbeiströmenden Rohwassers die Aufbereitungsvorrichtung als Konzentrat verläßt. Die Erfindung befaßt sich auch mit einer Vorrichtung zur Durchführung des eingangs erwähnten Verfahrens. Für das erfindungsgemäße Verfahren ist kennzeichnend, daß zumindest 90% des der Vorrichtung zugeführten Rohwassers zu Reinwasser aufbereitet wird. Zusätzlich kann das vergleichsweise hoch konzentrierte Konzentrat für den vorgeschalteten Enthärtungsprozeß wiederverwendet werden, wobei hier die Wasserausbeute der Gesamtanlage (Enthärter und Umkehrosmose) mindestens 90% beträgt. Durch diese hohe Reinwasser-Ausbeute und den entsprechend geringen Wasserverbrauch läßt sich eine erhebliche Kosten- und Resourceneinsparung (Wasser, Salz, Energie) erzielen. Daraus ergibt sich zusätzlich ein wichtiger Beitrag zum Umweltschutz, der Geld spart und sich damit rasch durchsetzen dürfte.

## Beschreibung

Die Erfindung betrifft ein Verfahren zur Reinwasserherstellung mit einer Umkehrosmose-Vorrichtung, welche zumindest zwei Aufbereitungsstufen hat, von denen das Reinwasser wenigstens einer Aufbereitungsstufe einer in Strömungsrichtung nachfolgenden Aufbereitungsstufe als Rohwasser zugeführt wird, wobei jeder Aufbereitungsstufe jeweils wenigstens eine semipermeable Membran zugeordnet ist, welche eine Teilmenge des der Aufbereitungsstufe zugeführten Rohwassers unter der treibenden Kraft einer Druckdifferenz passiert und wobei die Restmenge des an der Membran vorbeiströmenden Rohwassers die Aufbereitungsstufe als Konzentrat verläßt.

Die Erfindung befaßt sich auch mit einer Umkehrosmose-Vorrichtung zur Reinwasserherstellung, insbesondere zur Durchführung des eingangs erwähnten Verfahrens, mit zumindest zwei Aufbereitungsstufen, welchen jeweils wenigstens eine semipermeable Membran zugeordnet sind, die einen Rohwasserbereich dieser Aufbereitungsstufe von einem Reinwasserbereich derart trennt, daß eine Teilmenge des an der Membran vorbeiströmenden Rohwassers diese unter der treibenden Kraft einer Druckdifferenz als Reinwasser passiert, wobei jede Aufbereitungsstufe in ihrem Reinwasserbereich mindestens einen Reinwasserauslaß aufweist und wenigstens zwei zu deren Rohwasserbereich führende Vorrichtungsöffnungen hat, von denen eine Vorrichtungsöffnung als Wassereinlaß zum Zuführen des Rohwassers zur Membran dient und von denen die andere Vorrichtungsöffnung als Wasserauslaß für das Konzentrat vorgesehen ist und wobei der Konzentratauslaß wenigstens einer Aufbereitungsstufe im Rohwassereinlaß einer in Strömungsrichtung vorgeschalteten Aufbereitungsstufe mündet.

Zur Wasserentsalzung und Wasserreinigung ist es bereits bekannt, das einer Umkehrosmose-Anlage zugeführte Rohwasser mittels einer semipermeablen Membran nach dem Prinzip einer Umkehrosmose aufzubereiten.

Diesen vorbekannten Umkehrosmose-Anlagen ist in der Regel eine Enthärtungseinrichtung vorgeschaltet, die ein Ausfällen sogenannter Härtebildner auf der Membran verhindern und die Reinwasser- Ausbeute der Anlage steigern soll. Derartige Umkehrosmose-Anlagen erreichen Wasserausbeuten von 60% bis 75%, in Ausnahmefällen von 80% Reinwasser in Bezug auf die eingespeiste Rohwasser-Menge. Die vorgeschaltete Enthärtungsanlage verbraucht bis zu 10% des der Umkehrosmose-Anlage zugeführten Wassers sowie eine entsprechende Menge Salz zum Regenerieren. Dadurch sinkt wiederum die gesamte Reinwasserausbeute der Gesamt-Anlage auf ca. 54% bis 75% des der Gesamt-Anlage zugeführten Rohwassers.

Auch kennt man bereits Umkehrosmose-Anlagen der eingangs erwähnten Art, die zur Verbesserung der Reinwasser-Qualität zwei Aufbereitungsstufen haben. Diese zweistufigen Umkehrosmose-Anlagen weisen jedoch bloß eine Reinwasser-Ausbeute von insgesamt etwa 70% auf, die bei einer vorgeschalteten Enthärtungsanlage auf insgesamt ca. 65% absinkt.

Die immer knapper werdenden Wasserressourcen sowie die steigenden Wasserpreise einerseits und die Aufsalzung der Gewässer durch die zur Regeneration von Enthärtungsanlagen verwendeten Regeneriersalze andererseits erfordern neue öknomische und ökologische Lösungen.

Es besteht daher insbesondere die Aufgabe, ein Verfahren zur Wasseraufbereitung sowie eine entsprechende Umkehrosmose-Vorrichtung zu schaffen, die eine kostengünstige Aufbereitung bei vergleichsweise geringen Konzentratmengen erlauben.

Die erfindungsgemäße Lösung besteht bei dem Verfahren der eingangs erwähnten Art insbesondere darin, daß zumindest 90% des der Umkehrosmose-Anlage zugeführten Rohwassers zu Reinwasser aufbereitet wird.

Bei dem erfindungsgemäßen Verfahren zur Reinwasserherstellung werden die in Strömungsrichtung einander nachgeschalteten Aufbereitungsstufen der Umkehrosmose-Vorrichtung genutzt, um eine zum Vergleich zu vorbekannten Verfahren wesentlich höhere Reinwasserausbeute bei einer vergleichbaren Wasserqualität zu erreichen. Dadurch kann der Konzentratwasser-Anteil und damit auch der Wasserverbrauch bei dem erfindungsgemäßen Verfahren wesentlich reduziert werden. Da bei einem vorgeschalteten Enthärtungsvorgang die Menge des verwendeten Regeneriersalzes an die der Umkehrosmose-Vorrichtung zugeführte RohwasserMenge anzupassen ist, ist das erfindungsgemäße Aufbereitungsverfahren bei gleicher Menge aufbereiteten Reinwassers mit einem geringeren Verbrauch an Regeneriersalzen verbunden. Dadurch kann mit Hilfe des erfindungsgemäßen Verfahrens der Salzeintrag in den Wasserkreislauf und damit auch eine Aufsalzung des Wassers erheblich vermindert werden. Insgesamt läßt sich somit eine kostengünstigere und leistungsfähigere Wasseraufbereitung und Reinwasserherstellung erreichen.

Dabei ist bei einem bevorzugten Vorschlag gemäß der Erfindung vorgesehen, daß das Konzentrat zumindest einer Stufe einer in Strömungsrichtung vorgeschalteten Stufe als Rohwasser zugemischt oder zugeführt wird, wobei hiervor maximal 10% mit dem Konzentrat der vorgeschalteten Stufe abgeführt wird. Da auch das Konzentrat einer in Strömungsrichtung nachgeschalteten Stufe einen vergleichsweise geringeren beziehungsweise etwa gleich hohen Salzgehalt hat, kann es zur nochmaligen Aufbereitung einer vorgeschalteten Aufbereitungsstufe als Rohwasser zugemischt oder zugeführt werden. Von dem der vorgeschalteten Aufbereitungsstufe zugemischten oder zugeführten Rohwasser werden anschließend nur maximal 10% mit dem Konzentrat aus dieser Aufbereitungsstufe abgeführt.

Mit der bereits in der ersten Aufbereitungsstufe erhöhten Reinwasserausbeute steigt der Salzgehalt im Rohwasserbereich dieser Aufbereitungsstufe. Dieser erhöhte Salzgehalt bewirkt, daß das im enthärteten Wasser insbesondere gelöste NaHC03 unter Hindurchtreten der Kohlensäure (C0₂) den pH-Wert des Konzentrates anhebt. Mit dem Ansteigen des pH-Werts wird gleichzeitig das Rückhaltevermögen der derzeit üblichen Membranen verbessert. Somit begünstigt das erfindungsgemäße Verfahren gleichzeitig auch die Herstellung von Reinwasser in einer verbesserten Wasserqualität.

Um beispielsweise die im Permeat der ersten Aufbereitungsstufe sowie der nachfolgenden Aufbereitungsstufen enthaltene freie Kohlensäure (C0₂) und andere Salze besser in den folgenden Aufbereitungsstufen zurückhalten zu können und um die Leitungen vor dem Angriff derart saurer Medien zu schützen, ist es zweckmäßig, wenn dem Rohwasser zumindest einer Aufbereitungsstufe, vorzugsweise der zweiten und/oder einer nachfolgenden Aufbereitungsstufe Kalilauge oder dergleichen Neutralisationsmittel zur Neutralisation des pH-Wertes zugeführt wird. Dabei zeichnet sich insbesondere die hier als Neutralisationsmittel verwendete Kalilauge infolge ihres hohen Molekulargewichtes durch eine gute Zurückhaltung vor der semipermeablen Membran aus. Durch die Zufuhr des Neutralisationsmittels und insbesondere durch die Zufuhr von Kalilauge wird der höchste Salzrückhalt bei der in Strömungsrichtung folgenden Membran erreicht. Wegen der vergleichsweise geringen Menge zugeführten Rohwassers und der hohen Reinwasserausbeute ist bei dem erfindungsgemäßen Verfahren zur Reinwasserherstellung allenfalls eine vergleichsweise geringe Menge des Neutralisationsmittels erforderlich, die etwa auf das 1,1-fache der zum pH-Ausgleich des Permeats erforderlichen Menge beschränkt werden kann.

Vorteilhaft ist es, wenn der Umkehrosmose- Vorrichtung "weiches" Wasser zugeführt wird und wenn das Rohwasser dazu vor der ersten Umkehrosmose-Vorrichtung vorzugsweise enthärtet wird. Durch eine solche Enthärtungsanlage, mit der "weiches" Wasser erzeugt werden kann, soll ein Kalk-Niederschlag auf den Membranflächen verhindert werden, der der gewünschten hohen Reinwasser- Ausbeute andernfalls entgegenwirken könnte. Dabei muß auch die Enthärtungsanlage bloß auf 111% der mit der erfindungsgemäßen Umkehrosmose-Vorrichtung vorgesehenen Permeatleistung ausgelegt werden, wodurch Investitionskosten und Platzbedarf ebenfalls reduziert werden.

Um den Wasserverbrauch zusätzlich zu reduzieren und um die hohe Reinwasserausbeute bei dem erfindungsgemäßen Verfahren zu begünstigen, ist es vorteilhaft, wenn zur Regenerierung des Enthärters wenigstens ein Teil des Konzentrats zumindest einer Stufe, vorzugsweise der ersten Stufe, verwendet wird und wenn der Wasseraufbereitungsfaktor (WCF-Wert) insbesondere der ersten Stufe auf die zur Regenerierung benötigte Wassermenge des Enthärters derart abgestimmt wird, daß die Konzentrat-Menge dieser Stufe(n) der benötigten Regenerierungs-Wassemenge etwa entspricht. Dabei kann das Konzentrat zum Rückspülen, Besalzen und Wasserauffüllen im Solebehälter der Enthärteranlage verwendet werden, wobei infolge des Salzgehalts des Konzentrats sowie der darin gelösten, zum Kationen-Austausch ebenfalls zu verwendenden Natrium-Ionen geringere Mengen des Regeneriersalzes erforderlich sind. Insbesondere begünstigt hier die Dosierung von KOH beziehungsweise NaOH die Anreicherung von Salzen im Konzentrat, die neben dem Zweck der Rückhalteverbesserung bei der Membran (den Membranen) nochmals beim Enthärtungsprozeß genutzt werden und somit zusätzlich Regenerationssalz einsparen. Dies hat in erwünschter Weise wiederum einen geringeren Salzeintrag in den Wasserkreislauf zur Folge. Lediglich zum Schnell- oder Klarspülen (letzter Spülgang des Regenerationsprozesses) wird nicht das Konzentrat, sondern Wasser mit einer besseren Wasserqualität verwendet.

Infolge der hohen Reinwasserausbeute und des entsprechend höheren Gehaltes an Inhaltsstoffen zumindest in der ersten Aufbereitungsstufe können die Membranflächen bei dem erfindungsgemäßen Verfahren eventuell zusätzlich verschmutzen. Um diese Membranflächen auf einfache Weise und mit geringem Aufwand reinigen zu können, ist bei einer bevorzugten Weiterbildung gemäß der Erfindung vorgesehen, daß die Aufbereitungsstufen wenigstens ein Wickelmodul als semipermeable Membran haben, das mittels einer zeitweisen Reduzierung oder Unterbrechung des Reinwasserabflusses von zumindest einer Aufbereitungsstufe, insbesondere der ersten Aufbereitungsstufe eine Erhöhung des statischen Wasserdrucks auf der Reinwasserseite dieser Aufbereitungsstufe bewirkt wird und daß nach einer statischen Druckerhöhung auf der Reinwasserseite, insbesondere nach einer Angleichung des statischen Wasserdrucks auf beiden Seiten dieser Aufbereitungsstufe, der auf der Rohwasserseite bestehende statische Wasserdruck relativ zu dem auf der Reinwasserseite bestehenden Wasserdruck in Zeitintervallen kurzzeitig, vorzugsweise schlagartig gesenkt wird. Durch eine solche schlagartige oder impulsartige Absenkung des auf der Rohwasserseite der Umkehrosmose-Vorrichtung beziehungsweise ihrer Aufbereitungsstufe(n) bestehenden statischen Wasserdrucks relativ zu dem auf der Reinwasserseite bestehenden statischen Wasserdruck wird zwar die Reinwasserherstellung unterbrochen, jedoch führt diese vorübergehende Druckänderung zu einer schwallartigen Rückströmung des Reinwassers von dem kurzfristig den höheren statischen Druck aufweisenden Reinwasserbereich zum Rohwasserbereich. Diese Rückströmung bewirkt eine Durch- oder Schwallspülung der Membranwände sowie eine Reinigung der Aufbereitungsstufen in entsprechenden Zeitintervallen, so daß höhere Membranstandzeiten begünstigt werden. Zusätzlich oder stattdessen kann beispielsweise zur Senkung des auf der Rohwasserseite bestehenden statischen Wasserdruckes die Fließgeschwindigkeit und somit der dynamische Wasserdruck des an der Membran vorbeiströmenden Rohwassers erhöht werden.

Zweckmäßig ist es, wenn der Wasserausbeutefaktor (WCF-Wert) der zweiten Aufbereitungsstufe gleich oder kleiner als der Wasseraufbereitungsfaktor der ersten Aufbereitungsstufe ist. Durch eine Reduzierung des WCF-Wertes (Water Conversion Factor) wird der Salzrückgehalt der zweiten Aufbereitungsstufe wesentlich verbessert, so daß das mit einem vergleichsweise hohen Salzgehalt zufließende Reinwasser der ersten Aufbereitungsstufe in der zweiten Aufbereitungsstufe zu einem hochqualitativen und salzarmen Wasser aufbereitet werden kann. Durch die oben beschriebene Schwallspülung wird eine übermäßige Verschmutzung der Aufbereitungsstufen, inbesondere der ersten Aufbereitungsstufe, verhindert. Dabei ist es möglich, alle Aufbereitungsstufen mit einem WCF-Wert von 90 bis 95% zu fahren, wobei die erste Aufbereitungsstufe beispielsweise mit einem WCF-Wert von 95% und die zweite Aufbereitungsstufe mit einem WCF-Wert von 90% betrieben werden.

Vorteilhaft ist es, wenn zur Härteüberwachung der ersten Aufbereitungsstufe deren Konzentrat verwendet wird. Die Härteüberwachung der ersten Aufbereitungsstufe kann wesentlich genauer erfolgen, wenn die aufkonzentrierte Härte des Konzentrats dieser Aufbereitungsstufe gemessen wird. Zwar hat die Härtemessung anhand des Konzentrats zur Folge, daß Störungen in der Enthärtungsanlage nur mit einer Zeitverzögerung erfasst werden, jedoch werden durch diese Zeitverzögerung geringfügige Unregelmäßigkeiten eliminiert und Fehlalarme weitgehend vermieden.

Die erfindungsgemäße Lösung bei der Umkehrosmose-Vorrichtung der eingangs erwähnten Art besteht insbesondere darin, daß dem Reinwasserauslaß zumindest der in Strömungsrichtung letzten Aufbereitungsstufe der Umkehrosmosevorrichtung eine Reinwasserleitung nachgeschaltet ist, die eine maximale Durchströmkapazität von zumindest 90% des der Umkehrosmose-Vorrichtung zugeführten Rohwassers hat und/oder daß dem Konzentrat-Auslaß wenigstens einer Aufbereitungsstufe eine Konzentratleitung nachgeschaltet ist, die eine maximale Durchströmkapazität von höchstens 10% des der Umkehrosmose-Vorrichtung zugeführten Rohwassers aufweist. Dabei wird das Wasser durch die Reinwasser- und Konzentratleitungen mit den jeweils geforderten Strömungsgeschwindigkeiten gepumpt, die, wenn höhere hygienische Bedingungen einzuhalten sind, zwischen zwei bis vier Metern pro Sekunde liegen.

Die Reinwasser- und Konzentratleitungen der erfindungsgemäßen Vorrichtung sind an dessen hohe Reinwasserleistung derart angepasst, daß der Bildung eines Biofilms in diesen Leitungen wirkungsvoll entgegengewirkt wird. Vorbekannte Umkehrosmoseanlagen weisen demgegenüber einen wesentlich größeren Konzentrat-Abfluß auf, weshalb sie sich für das erfindungsgemäße Aufbereitungsverfahren nicht eignen.

Aus den gleichen Gründen ist es zweckmäßig, wenn in die Konzentratleitung zumindest der in Strömungsrichtung ersten Aufbereitungsstufe ein Konzentratregelventil, eine Blende oder dergleichen Regeleinrichtung zwischengeschaltet ist, deren maximaler Öffnungsquerschnitt auf eine Durchströmkapazität von höchstens 10% des der Umkehrosmose-Vorrichtung zugeführten Rohwassers ausgelegt ist und/oder daß dieser (diesen) Konzentratleitung(en) ein Durchflußmessgerät zugeordnet ist, dessen höchster anzeigbarer Meßwert einer Durchströmkapazität von höchstens 10% des der Umkehrosmose-Vorrichtung zugeführten Rohwassers entspricht. In Anbetracht der geringen Konzentratmengen bei dem erfindungsgemäßen Verfahren ist insbesondere die Verwendung von Nadelventilen als Konzentratregelventil empfehlenswert, mit denen sich die erfindungsgemäße Umkehrosmose-Vorrichtung in ihrer Aufbereitungsleistung gut einregeln läßt.

Zweckmäßig ist es, wenn die Aufbereitungsstufen jeweils zumindest ein Wickelmodul als semipermeable Membran aufweisen und wenn wenigstens einer der Aufbereitungsstufen vorzugsweise mehrere, insbesondere mehr als sieben bis neun Wickelmodule zugeordnet sind, die stufenweise in Strömungsrichtung in Serie einander nachgeschaltet sind. Die Wickelmodule sind somit in jeder Aufbereitungsstufe rohwasser- und konzentratseitig mit dem in Strömungsrichtung davor angeordneten oder dahinter nachgeschalteten Wickelmodul verbunden. Während bei bisherigen Umkehrosmose-Anlagen die Wickelmodule stufenweise auf den minimal möglichen Konzentratfluß pro Zeiteinheit abgestimmt waren und daher dort eine Parallelschaltung der Wickelmodule erforderlich wurde, können wesentlich mehr Wickelmodule der erfindungsgemäßen Umkehrosmose-Vorrichtung in Serie hintereinander geschaltet werden. Einer Verödung einzelner Module kann durch die oben beschriebene intervallartige kurzzeitige Schwallspülung zusätzlich entgegengewirkt werden. Eine Parallelschaltung der Module ist daher bei der erfindungsgemäßen Umkehrosmose-Vorrichtung erst bei wesentlich höheren Leistungen im Vergleich zu bisherigen Anlagen nötig.

Da der erfindungsgemäßen Umkehrosmose- Vorrichtung im Vergleich zu vorbekannten Anlagen bei gleicher Reinwasser-Leistung geringere Rohwasser-Mengen zuzuführen sind, können auch die Förderpumpen, Enthärtungsanlagen und Einrichtungen zur Vorbehandlung auf eine geringere Leistung ausgelegt sein. Dabei ist es zweckmäßig, wenn die der in Strömungsrichtung ersten Aufbereitungsstufe vorgeschaltete Enthärtungseinrichtung und/oder die Druckerhöhungspumpe eine Höchstleistung von höchstens 111 % der in der Umkehrosmose-Vorrichtung maximal aufzubereitenden Reinwasser-Menge haben. Bei einer solchen Auslegung der erfindungsgemäßen Umkehrosmose-Vorrichtung wird eine hohe Reinwasserleistung und gute Wasserqualität sichergestellt bei gleichzeitig geringem Energieverbrauch. Durch die Serienschaltung und die kleineren Rohrdurchmesser reduzieren sich die Herstellungskosten.

Um das Konzentrat einer Aufbereitungsstufe aus den oben erwähnten Gründen einer in Strömungsrichtung vorgeschalteten Aufbereitungsstufe zuführen zu können, ist es vorteilhaft, wenn der Konzentratauslaß zumindest einer Aufbereitungsstufe in dem Rohwasserzulauf einer in Strömungsrichtung vorgeschalteten Stufe mündet.

Zur pH-Anpassung des Salzgehaltes kann vorgesehen sein, daß die Umkehrosmose-Vorrichtungwenigstens eine KOH- oder Neutralisationsmittel-Zuführeinrichtung hat, deren Zuführöffnung vorzugsweise in Strömungsrichtung vor zumindest einer der Aufbereitungsstufen mündet. Durch die Zufuhr eines Neutralisationsmittels mit Hilfe der Zuführeinrichtung kann das im Konzentrat der ersten Aufbereitungsstufe sowie der nachfolgenden Aufbereitungsstufen enthaltene Kalium- oder Natriumhydrogenkarbonat und andere Salze besser durch die Membran zurückgehalten werden, um - da die Membrancharakteristik in der Regel den optimalen Salzrückhalt bei einem pH-Wert von 7 bis 8 hat - den Salzgehalt im Permeat zu reduzieren und um die Wasserleitungen vor dem Angriff derart saurer Medien zu schützen.

Um zumindest in einzelnen Aufbereitungsstufen die dort vorgesehenen Membranen durch eine intervallartige Schwallspülung reinigen zu können, ist es vorteilhaft, wenn zur wechselweisen Druckanpassung und Druckänderung des im Rohwassersowie im Reinwasserbereich der Aufbreitungsvorrichtung bestehenden Wasserdrucks der Reinwasserauslaß und die zum Rohwasserbereich führenden Vorrichtungsöffnungen wenigstens einer Aufbereitungsstufe, insbesondere der ersten Aufbereitungsstufe, jeweils mittels eines Sperrventils oder dergleichen Absperr- oder Regelorgans regulierbar sind.

Gemäß einer bevorzugten Ausführungsform gemäß der Erfindung, die den geringen Wasserverbrauch und die hohe Reinwasser-Ausbeute der erfindungsgemäßen Umkehrosmose-Vorrichtung begünstigt, ist vorgesehen, daß dem Konzentratauslaß zumindest der ersten Aufbereitungsstufe, insbesondere aller Aufbereitungsstufen, ein Auffangbehälter in Strömungsrichtung nachgeschaltet ist, der einer Enthärtungsanlage als Regenerationswasserspeicher zugeordnet ist. Somit können die Salze, die durch die hohe Wasserausbeute im Vergleich zu bisherigen Anlagen in sehr hoher Konzentration im Konzentrat vorliegen, zum Regenerieren des in der Enthärtungsanlage vorgesehenen lonenaustauschers nochmals verwendet und insoweit die Zufuhr von Regeneriersalz und Regenerationswasser reduziert werden.

Zweckmäßig ist es, wenn die Umkehrosmose- Vorrichtung maximal vier, in Strömungsrichtung einander nachgeschaltete Aufbereitungsstufen aufweist. Bei dieser Ausführungsform wird der konstruktive Aufwand begrenzt, ohne daß damit eine wesentliche Verschlechterung der Reinwasser-Ausbeute, bei jeweiliger Steigerung der Reinwasser-Qualität, verbunden wäre.

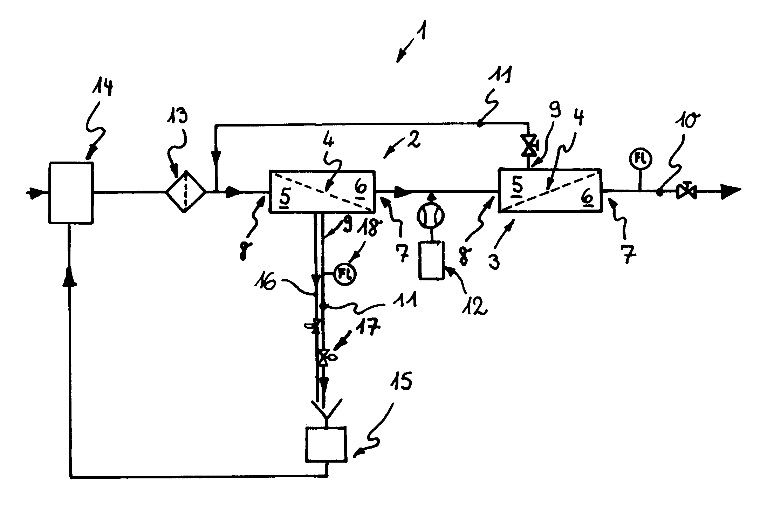

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

In der einzigen Figur ist eine Umkehrosmose- Vorrichtung 1 dargestellt, die zur Herstellung von Reinwasser dient. Die Vorrichtung 1 hat zwei Aufbereitungsstufen 2, 3, denen jeweils wenigstens eine semipermeable Membran 4 zugeordnet ist. Die semipermeablen Membranen, die in den Aufbereitungsstufen 2, 3 vorgesehen sind, trennen einen Rohwasserbereich 5 dieser Aufbereitungsstufen 2, 3 von einem Reinwasserbereich 6 derart ab, daß eine Teilmenge des an der Membran 4 vorbeiströmenden Rohwassers diese unter der treibenden Kraft einer Druckdifferenz als Reinwasser passiert.

Wie in der Figur gut erkennbar ist, weist jede Aufbereitungsstufe 2, 3 in ihrem Reinwasserbereich 6 mindestens einen Reinwasserauslaß 7 auf, während jeweils wenigstens zwei Vorrichtungsöffnungen 8, 9 zum Rohwasserbereich 5 dieser Aufbereitungsstufen 2, 3 führen. Von den Vorrichtungsöffnungen 8, 9 dient die eine Vorrichtungsöffnung 8 als Wassereinlaß zum Zuführen des Rohwassers zur Membran 4 dieser Aufbereitungsstufe, während die andere Vorrichtungsöffnung 9 als Wasserauslaß für das Konzentrat vorgesehen ist.

In der einzigen Figur wird deutlich, daß der Reinwasserauslaß 7 der ersten Aufbereitungsstufe im Rohwassereinlaß 8 der zweiten Aufbereitungsstufe 3 mündet. Gleichzeitig mündet der Konzentratauslaß 9 der zweiten Aufbereitungsstufe 3 in dem Rohwasserzulauf 8 der in Strömungsrichtung vorgeschalteten Stufe 2 der Vorrichtung 1.

Die Vorrichtung 1 ist so ausgelegt, daß zumindest 90% des der Umkehrosmose-Anlage 1 zugeführten Rohwassers zu Reinwasser aufbereitet wird. Dazu ist dem Reinwasserauslaß 7 der in Strömungsrichtung letzten Aufbereitungsstufe 3 der Umkehrosmose-Vorrichtung 1 eine Reinwasserleitung 10 nachgeschaltet, die eine maximale Durchströmkapazität von zumindest 90% des der Umkehrosmose-Vorrichtung 1 zugeführten Rohwassers hat. Dem Konzentrat-Auslaß 9 der Aufbereitungsstufen 2, 3 ist jeweils eine Konzentratleitung 11 nachgeschaltet, die eine maximale Durchströmkapazität von höchstens 10% des der Umkehrosmose-Vorrichtung 1 zugeführten Rohwassers hat. Durch diese Ausgestaltung der Reinwasser- und Konzentratleitungen 10, 11 wird der Bildung eines Biofilmes entgegengewirkt.

Der Wasseraufbereitungsfaktor der beiden Aufbereitungsstufen 2, 3 ist zwischen 90% bis 95% des zugeführten Rohwassers eingeregelt. Dabei ist der Wasseraufbereitungsfaktor der zweiten Aufbereitungsstufe 3 gleich oder kleiner als der Wasseraufbereitungsfaktor der ersten Aufbereitungsstufe 2. Während in der ersten Aufbereitungsstufe 2 eine möglichst große Menge Reinwasser hergestellt werden soll, wird dieses noch vergleichsweise salzhaltige Reinwasser der ersten Aufbereitungsstufe 2 in der zweiten Aufbereitungsstufe 3 zu einem qualitativ hochwertigen und salzarmen Wasser aufbereitet.

Damit der Umkehrosmose-Vorrichtung 1 "weiches" Wasser zur Aufbereitung zugeführt werden kann, wird das der Vorrichtung 1 zugeführte Rohwasser vor der ersten Aufbereitungsstufe 2 in einer Enthärtungs-Einrichtung 14 enthärtet. Zur Regenerierung des Enthärters in der Enthärtungsanlage 14 wird das Konzentrat der ersten Aufbereitungsstufe verwendet. Dabei kann der Wasseraufbereitungsfaktor der ersten Aufbereitungsstufe 2 auf die zur Regenerierung benötigte Wassermenge der Enthärteranlage 14 derart abgestimmt, daß die Konzentrat-Menge dieser ersten Aufbereitungsstufe 2 der benötigten Regenerierungs-Wassermenge etwa entspricht. Dazu ist dem Konzentratauslaß 9 der ersten Aufbereitungsstufe 2 ein Auffangbehälter 15 in Strömungsrichtung nachgeschaltet, der der Enthärtungsanlage 14 als Regenerationswasserspeicher zugeordnet ist.

Zur Neutralisation des Salzgehalts ist eine Neutralisationsmittel-Zuführeinrichtung 12 vorgesehen, die hier zwischen die erste Aufbereitungsstufe 2 und die zweite Stufe 3 zwischengeschaltet ist. Mit Hilfe der Neutralisationsmittel-Zuführeinrichtung wird dem der Stufe 3 zugeführten Rohwasser Kalilauge oder dergleichen zugesetzt, die das im Wasser gelöste Salz neutralisieren soll. Falls eine besonders hohe Wasserqualität gewünscht ist, kann auch unmittelbar vor jeder Aufbereitungsstufe dem dieser Stufe jeweils zugeführten Rohwasser Kalilauge oder dergleichen Neutralisationsmittel zugeführt werden.

Wie aus der einzigen Figur deutlich wird, ist in Strömungsrichtung hinter der Enthärtungsanlage 14, jedoch noch vor der ersten Aufbereitungsstufe 2, ein Vorfilter 13 zwischengeschaltet, das grobere Schmutzpartikel ausfiltert.

Die Aufbereitungsstufen 2, 3 der Vorrichtung 1 können jeweils mehr als sieben bis neun Wickelmodule als semipermeable Membranen aufweisen, die in jeder der Aufbereitungsstufen 2, 3 in Strömungsrichtung in Serie einander nachgeschaltet werden. Um die Wickelmodule der Aufbereitungsstufen 2, 3, insbesondere die der ersten Aufbereitungsstufe 2, in Zeitabständen reinigen und von einem eventuellen Belag säubern zu können, ist vorgesehen, daß mittels einer zeitweisen Reduzierung oder Unterbrechung des Reinwasserabflusses von zumindest einer Aufbereitungsstufe, insbesondere der ersten Aufbereitungsstufe 2, eine Erhöhung des statischen Wasserdrucks auf der Reinwasserseite 6 dieser Aufbereitungsstufe 2 bewirkt wird und daß nach einer statischen Druckerhöhung auf der Reinwasserseite 6, insbesondere nach einer Angleichung des statischen Wasserdrucks auf beiden Seiten dieser Aufbereitungsstufe 2, der auf der Rohwasserseite 5 bestehende statische Wasserdruck relativ zu dem auf der Reinwasserseite 6 bestehenden Wasserdruck in Zeitintervallen kurzzeitig, vorzugsweise schlagartig, gesenkt wird. Zusätzlich oder stattdessen kann zur Senkung des auf der Rohwasserseite 5 bestehenden statischen Wasserdrucks aber auch die Fließgeschwindigkeit des an der Membran 4 der betreffenden Aufbereitungsstufe 2 vorbeiströmenden Rohwassers erhöht werden. Parallel zur Konzentratleitung 11 der ersten Aufbereitungsstufe 2 ist dazu eine By-Pass-oder Neben-Leitung 16 vorgesehen, die ebenfalls im Auffangbehälter 15 mündet, so daß durch Öffnen dieser By-Pass-Leitung 16 auf der Rohwasserseite 5 der Aufbereitungsstufe 2 die Fließgeschwindigkeit des an der Membran 4 vorbeiströmenden Rohwassers erhöht werden kann.

Wie aus der einzigen Figur deutlich wird, mündet der Konzentratauslaß 9 der zweiten Aufbereitungsstufe 3 in dem Rohwasserzulauf der in Strömungsrichtung vorgeschalteten ersten Aufbereitungsstufe 2. Auf diese Weise wird das Konzentrat der zweiten Aufbereitungsstufe 3 der in Strömungsrichtung vorgeschalteten ersten Aufbereitungsstufe 2 als Rohwasser zugemischt, wobei hiervon maximal 10% mit dem Konzentrat dieser ersten Aufbereitungsstufe 2 abgeführt wird.

In die Konzentratleitung 11 der in Strömungsrichtung ersten Aufbereitungsstufe 2 ist ein Konzentratregelventil 17 zugeschaltet, dessen maximaler Öffnungsquerschnitt auf eine Durchströmkapazität von höchstens 10% des der Umkehrosmose- Vorrichtung 1 zugeführten Rohwassers ausgelegt ist. Der Konzentratleitung 11 der ersten Aufbereitungsstufe 2 ist gleichzeitig ein Durchflußmeßgerät 18 zugeordnet, dessen höchster anzeigbarer Meßwert einer Durchströmkapazität von höchstens 10% des der Umkehrosmose-Vorrichtung 1 zugeführten Rohwassers entspricht. Die der in Strömungsrichtung ersten Aufbereitungsstufe 2 vorgeschaltete Enthärtungseinrichtung 14 sowie die ebenfalls vorgeschaltete - hier allerdings nicht sichtbare - Druckerhöhungspumpe haben eine Höchstleistung von höchstens 111% der in der Umkehrosmose-Vorrichtung 1 maximal aufzubereitenden Reinwasser-Menge. Dabei wird die Vorrichtung 1 mit einer Wasser-Fließgeschwindigkeit betrieben, die üblicherweise zwischen 2 bis 4 m/sec. liegt, wenn es mikrobiologisch erforderlich ist.

Die hier dargestellte Umkehrosmose-Vorrichtung 1 zeichnet sich durch einen wesentlich geringeren Wasserverbrauch und eine erheblich höhere Reinwasser-Ausbeute aus, wobei im Vergleich zu vorbekannten einstufigen Umkehrosmose-Anlagen die gleiche oder eine bessere Wasserqualität erreicht werden kann. Zumindest bei dreistufiger Ausgestaltung der erfindungsgemäßen Umkehrosmoseanlage wird im Vergleich zu vorbekannten zweistufigen Anlagen eine bessere Qualität mit immer noch mindestens 90% Gesamtausbeute erzielt. Entscheidend besser ist immer der geringe Wasserverlust der ersten Stufe (ca. 3 - 10 %), der in Verbindung mit der Rückführung des Konzentrates auch nur entsprechend geringere Verluste der folgenden Stufen hat. Mit der höheren Reinwasser- Ausbeute und den dementsprechend geringeren Mengen zugeführten Rohwassers kann bei der erfindungsgemäßen Vorrichtung 1 auch der während des Enthärtungsprozesses erforderliche Regeneriersalzverbrauch reduziert werden, so daß einem übermäßigen Salzeintrag in den Wasserkreislauf entgegengewirkt und eine Aufsalzung des Wassers verhindert wird. Ebenfalls kann der Regenerationswasserverbrauch entsprechend gesenkt werden, wodurch eine zusätzliche Resourcenschonung wertvollen Trinkwassers möglich ist.

## Patentansprüche

1. Verfahren zur Reinwasserherstellung mit einer Umkehrosmose-Vorrichtung (1), welche zumindest zwei Aufbereitungsstufen (2, 3) hat, von denen das Reinwasser wenigstens einer Aufbereitungsstufe (2) einer in Strömungsrichtung nachfolgenden Aufbereitungsstufe (3) als Rohwasser zugeführt wird, wobei jeder Aufbereitungsstufe (2, 3) jeweils wenigstens eine semipermeable Membran (4) zugeordnet ist, welche eine Teilmenge des der Aufbereitungsstufe (2, 3) zugeführten Rohwassers unter der treibenden Kraft einer Druckdifferenz passiert und wobei die Restmenge des an der Membran (4) vorbeiströmenden Rohwassers die Aufbereitungsstufe (2, 3) als Konzentrat verläßt, dadurch gekennzeichnet, daß zumindest 90% des der Umkehrosmose-Vorrichtung (1) zugeführten Rohwassers zu Reinwasser aufbereitet wird.

2. Verfahren nach Anspruch 1, dadurch gekennzeichnet, daß das Konzentrat zumindest einer Stufe (3) einer in Strömungsrichtung vorgeschalteten Aufbereitungsstufe (2) als Rohwasser zugemischt oder zugeführt wird, wobei hiervon maximal 10% mit dem Konzentrat der vorgeschalteten Aufbereitungsstufe (2) abgeführt wird.

3. Verfahren nach Anspruch 1 oder 2, dadurch gekennzeichnet, daß dem Rohwasser zumindest einer Aufbereitungsstufe (2), vorzugsweise der zweiten und/oder einer nachfolgenden Aufbereitungsstufe, Kalilauge oder dergleichen Neutralisationsmittel zur Neutralisation des Salzgehalts zugeführt wird.

4. Verfahren nach einem der Ansprüche 1 bis 3, dadurch gekennzeichnet, daß der Umkehrosmose-Vorrichtung (1) "weiches" Wasser zugeführt wird, daß das Rohwasser dazu vor der ersten Aufbereitungsstufe (2) enthärtet wird, und daß zur Regenerierung des Enthärters wenigstens ein Teil des Konzentrats zumindest einer Stufe, vorzugsweise der ersten Stufe (2), verwendet wird.

5. Verfahren nach einem der Ansprüche 1 bis 4, dadurch gekennzeichnet, daß der Aufbereitungsfaktor (WCF-Wert) insbesondere der ersten Stufe (2) auf die zur Regenerierung benötigte Wassermenge und/oder Salzmenge derart abgestimmt wird, daß die Konzentrat-Menge dieser Stufe(n) der benötigten Regenerierungs-Wassermenge etwa entspricht.

6. Verfahren nach einem der Ansprüche 1 bis 5, dadurch gekennzeichnet, daß die Aufbereitungsstufen (2, 3) wenigstens ein Wickelmodul als semipermeable Membran (4) haben, das mittels einer zeitweisen Reduzierung oder Unterbrechung des Reinwasserabflusses von zumindest einer Aufbereitungsstufe, insbesondere der ersten Aufbereitungsstufe, eine Erhöhung des statischen Wasserdrucks auf der Reinwasserseite dieser Aufbereitungsstufe bewirkt wird und daß nach einer statischen Druckerhöhung auf der Reinwasserseite, insbesondere nach einer Angleichung des statischen Wasserdrucks auf beiden Seiten dieser Aufbereitungsstufe, der auf der Rohwasserseite bestehende statische Wasserdruck relativ zu dem auf der Reinwasserseite bestehenden statischen Wasserdruck in Zeitintervallen kurzzeitig, vorzugsweise schlagartig, gesenkt wird.

7. Verfahren nach einem der Ansprüche 1 bis 6, dadurch gekennzeichnet, daß zur Senkung des auf der Rohwasserseite bestehenden statischen Wasserdrucks die Fließgeschwindigkeit des an der Membran (4) zumindest einer Aufbereitungsstufe, insbesondere der ersten Aufbereitungsstufe (2) vorbeiströmenden Rohwassers erhöht wird.

8. Verfahren nach einem der Ansprüche 1 bis 7, dadurch gekennzeichnet, daß der Wasseraufbereitungsfaktor (WCF-Wert) der zweiten Aufbereitungsstufe (3) gleich oder kleiner als der Wasseraufbereitungsfaktor der ersten Aufbereitungsstufe (2) ist.

9. Verfahren nach einem der Ansprüche 1 bis 8, dadurch gekennzeichnet, daß zur Härteüberwachung der ersten Aufbereitungsstufe (2) deren Konzentrat verwendet wird.

10. Umkehrosmose-Vorrichtung zur Reinwasserherstellung, insbesondere zur Durchführung des Verfahrens nach einem der Ansprüche 1 bis 9, mit zumindest zwei Aufbereitungsstufen (2, 3), welchen jeweils wenigstens eine semipermeable Membran (4) zugeordnet ist, die einen Rohwasserbereich (5) dieser Aufbereitungsstufe (2, 3) von einem Reinwasserbereich (6) derart trennt, daß eine Teilmenge des an der Membran (4) vorbeiströmenden Rohwassers diese unter der treibenden Kraft einer Druckdifferenz als Reinwasser passiert, wobei jede Aufbereitungsstufe (2, 3) in ihrem Reinwasserbereich (6) mindestens einen Reinwasserauslaß (7) aufweist und wenigstens zwei zu deren Rohwasserbereich führende Vorrichtungsöffnungen (8, 9) hat, von denen eine Vorrichtungsöffnung (8) als Wassereinlaß zum Zuführen des Rohwassers zur Membran dient und von denen die andere Vorrichtungsöffnung (9) als Wasserauslaß für das Konzentrat vorgesehen ist und wobei der Konzentratauslaß (9) wenigstens einer Aufbereitungsstufe (2) im Rohwassereinlaß (8) einer in Strömungsrichtung nachgeschalteten Aufbereitungsstufe (3) mündet, dadurch gekennzeichnet, daß dem Reinwasserauslaß (7) zumindest der in Strömungsrichtung letzten Aufbereitungsstufe (3) der Umkehrosmose-Vorrichtung (1) eine Reinwasserleitung nachgeschaltet ist, die auf eine Durchströmkapazität von zumindest 90% des der Umkehrosmose-Vorrichtung zugeführten Rohwassers ausgelegt ist und/oder daß dem Konzentrat-Auslaß (9) wenigstens einer Aufbereitungsstufe (2, 3) eine Konzentratleitung (11) nachgeschaltet ist, die auf eine maximale Durchströmkapazität von 10% des der Umkehrosmose-Vorrichtung (1) zugeführten Rohwassers ausgelegt ist.

11. Umkehrosmose-Vorrichtung nach Anspruch 10, dadurch gekennzeichnet, daß in die Konzentratleitung (11) zumindest der in Strömungsrichtung ersten Aufbereitungsstufe (2) ein Konzentratregelventil (17), eine Blende oder dergleichen Regeleinrichtung zwischengeschaltet ist, deren Regelbereich auf eine Durchströmkapazität von höchstens 10% des der Umkehrosmose-Vorrichtung zugeführten Rohwassers ausgelegt ist und/oder daß dieser (diesen) Konzentratleitung(en) (11) ein Durchflußmeßgerät (18) zugeordnet ist, dessen Meßbereich auf eine Durchströmkapazität von höchstens 10% des der Umkehrosmose-Vorrichtung (1) zugeführten Rohwassers ausgelegt ist, bei einer Meßgenauigkeit von ca. ± 10% vom Endwert des Meßbereiches.

12. Umkehrosmose-Vorrichtung nach Anspruch 10 oder 11, dadurch gekennzeichnet, daß die der in Strömungsrichtung ersten Aufbereitungsstufe (2) vorgeschaltete Enthärtungseinrichtung (14) und/oder die Druckerhöhungspumpe und/oder weitere Vorbehandlungsstufen eine Höchstleistung von 111% der in der Umkehrosmose-Vorrichtung maximal aufzubereitenden Reinwasser-Menge haben.

13. Umkehrosmose-Vorrichtung nach einem der Ansprüche 10 bis 12, dadurch gekennzeichnet, daß die Aufbereitungsstufen (2, 3) jeweils zumindest ein Wickelmodul als semipermeable Membran (4) aufweisen und daß wenigstens einer der Aufbereitungsstufen (2, 3) vorzugsweise mehrere, insbesondere mehr als sieben bis neun Wickelmodule zugeordnet sind, die stufenweise in Strömungsrichtung in Serie einander nachgeschaltet sind.

14. Umkehrosmose-Vorrichtung nach einem der Ansprüche 10 bis 13, dadurch gekennzeichnet, daß der Konzentratauslaß (9) zumindest einer Aufbereitungsstufe (3) in dem Rohwasserzulauf (8) einer in Strömungsrichtung vorgeschalteten Stufe (2) mündet.

15. Umkehrosmose-Vorrichtung nach einem der Ansprüche 10 bis 14, dadurch gekennzeichnet, daß die Umkehrosmose-Vorrichtung (1) wenigstens eine KOH- oder Neutralisationsmittel-Zuführeinrichtung (12) hat, deren Zuführöffnung vorzugsweise in Strömungsrichtung vor zumindest einer der Aufbereitungsstufen (2) mündet.

16. Umkehrosmose-Vorrichtung nach einem der Ansprüche 10 bis 15, dadurch gekennzeichnet, daß zur wechselweisen Druckanpassung und Druckänderung des im Rohwasser- sowie im Reinwasserbereich zumindest einer Aufbereitungsstufe bestehenden Wasserdrucks der Reinwasserauslaß (7) und die zum Rohwasserbereich (5) führenden Vorrichtungsöffnungen (8, 9) wenigstens einer Aufbereitungsstufe, insbesondere der ersten Aufbereitungsstufe (2), jeweils mittels eines Sperrventils oder dergleichen Absperr- oder Regelorgans regulierbar sind.

17. Umkehrosmose-Vorrichtung nach einem der Ansprüche 10 bis 16, dadurch gekennzeichnet, daß dem Konzentratauslaß (9) zumindest der ersten Aufbereitungsstufe (2), insbesondere aller Aufbereitungsstufen (2, 3), ein Auffangbehälter (15) in Strömungsrichtung nachgeschaltet ist, der der vorgeschalteten Enthärtungsanlage (14) als Regenerationswasserspeicher zugeordnet ist.
